# EUROPÄISCHE PATENTSCHRIFT

(11) **EP 2 887 475 B1**
(45) Veröffentlichungstag und Bekanntmachung des Hinweises auf die Patenterteilung: **20.07.2016**
(21) Anmeldenummer: 14191006.7
(22) Anmeldetag: 30.10.2014
(51) Int. Cl.: H02G 1/12

(54) **Verfahren und Vorrichtung zum Durchtrennen einer Abschirmung eines Koaxialkabels**
Method and device for cutting through a shielding of a coaxial cable
Procédé et dispositif de séparation d'un blindage d'un câble coaxial

(30) Priorität: 19.12.2013 DE 102013021690
(43) Veröffentlichungstag der Anmeldung: 24.06.2015
(73) Patentinhaber: Lisa Dräxlmaier GmbH, 84137 Vilsbiburg (DE)
(72) Erfinder: Herzig, Jürgen, 84144 Geisenhausen (DE)

(56) Entgegenhaltungen:
- US-A1- 2009 095 723
- US-B1- 6 509 547

## Beschreibung

### Technisches Gebiet

Die vorliegende Erfindung betrifft ein Verfahren sowie eine Vorrichtung gemäß den Oberbegriffen der Ansprüche 1 und 11 wie aus der Druckschrift US 2009/0095723 bekannt.

### Stand der Technik

Aus der US 2009/0095723 ist ein Verfahren zum Durchtrennen einer Abschirmung eines Koaxialkabels mit Hilfe eines Laserstrahls und eines Hilfsgases bekannt, bei dem es jedoch möglicherweise zu einer Beschädigung der Innenleiterisolierung kommen kann, wenn der Laserstrahl die Abschirmung des Koaxialkabels durchtrennt.

### Beschreibung der Erfindung

Ausgehend vom Stand der Technik ist es eine Aufgabe der Erfindung, eine Möglichkeit zum Durchtrennen einer Abschirmung eines Koaxialkabels vorzuschlagen, die eine Beschädigung der Innenleiterisolierung wirksam verhindert.

Erfindungsgemäß wird diese Aufgabe durch die Gegenstände der unabhängigen Patentansprüche gelöst. Die abhängigen Patentansprüche geben Ausführungsformen der Erfindung an.

Dementsprechend umfasst die Erfindung ein Verfahren zum Durchtrennen einer Abschirmung eines Koaxialkabels, wobei das Koaxialkabel einen Innenleiter, eine den Innenleiter umgebende Innenleiterisolierung, die die Innenleiterisolierung umgebende Abschirmung und eine die Abschirmung umgebende Außenisolierung umfasst. Gemäß dem Verfahren wird zunächst ein Koaxialkabel bereitgestellt, bei dem an einem Ende die Außenisolierung entfernt ist, so dass ein Teil der Abschirmung freiliegt. Zwischen den freiliegenden Teil der Abschirmung und die Innenleiterisolierung wird eine wärmebeständige Hülse eingebracht. Anschließend wird die Abschirmung im freiliegenden Teil der Abschirmung mittels eines Laserstrahls durchtrennt. Aufgrund der Hülse kann der Laserstrahl nicht auf die Innenleiterisolierung treffen, so dass diese vor einer Beschädigung geschützt ist.

Im Sinne der Erfindung kann das Durchtrennen der Abschirmung mittels eines Laserstrahls auch bedeuten, dass mehrere Laserstrahlen verwendet werden, die von unterschiedlichen Seiten auf die Abschirmung gerichtet sind. Beispielsweise können drei Lasereinrichtungen verwendet werden, die jeweils um 120 Grad versetzt um das Koaxialkabel herum angeordnet sind.

In einer Ausführungsform wird der freiliegende Teil der Abschirmung aufgeweitet, insbesondere bevor die wärmebeständige Hülse eingebracht wird, damit die Hülse leichter zwischen den freiliegenden Teil der Abschirmung und die Innenleiterisolierung geschoben werden kann. Das Aufweiten kann beispielsweise durch Ausüben eines Druckes von außen auf den freiliegenden Teil der Abschirmung erfolgen. Vorzugsweise wird dieser Druck in einer im Wesentlichen senkrecht zu einer Längserstreckungsachse des Koaxialkabels verlaufenden Richtung ausgeübt. Auf diese Weise kann der freiliegende Teil der Abschirmung besonders einfach aufgeweitet werden. Alternativ könnte die Abschirmung beispielsweise mittels eines Vakuums von der Innenleiterisolierung zumindest teilweise abgesogen werden, um den freiliegenden Teil der Abschirmung aufzuweiten.

Die Hülse kann beispielsweise aus einem Keramikwerkstoff bestehen. Ein solcher Keramikwerkstoff ist günstig und besonders wärmebeständig.

Vorzugsweise reduziert sich ein Außenumfang der Hülse und/oder ein Außendurchmesser der Hülse zu einem Ende der Hülse hin. Das kann beispielsweise dazu führen, dass die Außenfläche der Hülse zumindest in einem Teilbereich kegelstumpfmantelförmig ausgestaltet ist. Durch den sich reduzierenden Außenumfang kann die Hülse besonders leicht unter den freiliegenden Teil der Abschirmung geschoben werden.

Im Rahmen des Schrittes des Durchtrennens der Abschirmung kann zunächst ein Laserstrahl mittels beispielsweise einer Neodym-dotierten Yttrium-Aluminium-Granat-Lasereinrichtung erzeugt werden. Eine solche Lasereinrichtung ist für den vorliegenden Zweck besonders geeignet.

Während des Durchtrennens der Abschirmung im freiliegenden Teil der Abschirmung mittels eines Laserstrahls kann das Koaxialkabel um eine Längserstreckungsachse des Koaxialkabels gedreht werden. Die Drehung kann dabei 360° betragen, um so die Abschirmung des Koaxialkabels entlang des kompletten Umfangs der Innenleiterisolierung mit einem einzigen Laserstrahl zu durchtrennen. Alternativ könnte das Koaxialkabel ausgehend von einem Nullpunkt 180 Grad links herum und ausgehend vom Nullpunkt 180 Grad recht herum gedreht werden, um so einen Schnitt entlang des kompletten Umfangs der Innenleiterisolierung zu erreichen. Wenn zwei Lasereinrichtungen verwendet werden, die um 180 Grad um das Koaxialkabel versetzt angeordnet sind, würde eine Drehung um 180 Grad für einen kompletten Schnitt ausreichen. Bei einer Verwendung von drei Lasereinrichtungen, die jeweils um 120 Grad versetzt um das Koaxialkabel herum angeordnet sind, würde bereits eine Drehung der Koaxialkabels um 120 Grad zu einem kompletten Schnitt führen.

Auch eine Bewegung eines Laseraustrittspunkts, aus dem der Laserstrahl austritt, um eine Längserstreckungsachse des Koaxialkabels kann während des Durchtrennens der Abschirmung im freiliegenden Teil der Abschirmung erfolgen. Beispielsweise kann eine Bewegung um 360° vorgenommen werden, um die Abschirmung entlang des kompletten Umfangs der Innenleiterisolierung zu durchtrennen.

Alternativ oder zusätzlich kann der Laserstrahl beispielsweise mittels eines Spiegels oder mehrerer Spiegel auf die Abschirmung reflektiert werden.

Das Drehen des Koaxialkabels, das Bewegen des Laseraustrittspunkts und das Reflektieren des Laserstrahls auf die Abschirmung mittels mindestens eines Spiegels können nach Belieben miteinander kombiniert werden. Beispielsweise ist es möglich, dass das Koaxialkabel während des Durchtrennens der Abschirmung im freiliegenden Teil der Abschirmung mittels des Laserstrahls um 180° um die Längserstreckungsachse des Koaxialkabels in einer ersten Drehrichtung gedreht wird, während der Laseraustrittspunkt um 180° in einer zweiten Drehrichtung, die der ersten Drehrichtung entgegengesetzt ist, bewegt wird. Auf diese Weise wird ein halbkreisförmiger Schnitt durch das Drehen des Koaxialkabels und ein weiterer halbkreisförmiger Schnitt durch das Bewegen des Laseraustrittspunkts erzeugt, so dass wiederum die Abschirmung um den kompletten Umfang der Innenleiterisolierung durchtrennt wird.

Vorzugsweise wird nach dem Durchtrennen der Abschirmung der mittels des Laserstrahls abgetrennte Teil der Abschirmung entfernt. Dies kann beispielsweise mittels einer Greifeinrichtung erfolgen, die den abgetrennten Teil der Abschirmung greift und ihn von der Innenleiterisolierung abzieht.

Gemäß einem weiteren Aspekt umfasst die vorliegende Erfindung eine Vorrichtung zum Durchtrennen einer Abschirmung eines Koaxialkabels, wobei das Koaxialkabel einen Innenleiter, eine den Innenleiter umgebende Innenleiterisolierung, die die Innenleiterisolierung umgebende Abschirmung und eine die Abschirmung umgebende Außenisolierung umfasst. Die Vorrichtung weist dabei eine Halteeinrichtung auf zum Halten eines Koaxialkabels, bei dem an einem Ende die Außenisolierung entfernt ist, so dass ein Teil der Abschirmung freiliegt. Darüber hinaus umfasst die erfindungsgemäße Vorrichtung eine Hülseneinführeinrichtung zum Einbringen einer wärmebeständigen Hülse zwischen den freiliegenden Teil der Abschirmung und die Innenleiterisolierung sowie eine Lasereinrichtung zum Durchtrennen der Abschirmung im freiliegenden Teil der Abschirmung mittels eines Laserstrahls.

Die Vorrichtung kann eine Aufweiteinrichtung zum Aufweiten des freiliegenden Teils der Abschirmung aufweisen. Diese Aufweiteinrichtung kann insbesondere dazu eingerichtet sein, das Aufweiten durch Ausüben eines Drucks von außen auf den freiliegenden Teil der Abschirmung zu bewirken. Vorzugsweise wird der Druck dabei in einer im Wesentlichen senkrecht zu einer Längserstreckungsachse des Koaxialkabels verlaufenden Richtung ausgeübt.

Bei der Lasereinrichtung handelt es sich beispielsweise um eine Neodym-dotierte Yttrium-Aluminium-Granat-Lasereinrichtung.

Die Halteeinrichtung kann dafür eingerichtet sein, das Koaxialkabel während des Durchtrennens der Abschirmung im freiliegenden Teil der Abschirmung mittels eines Laserstrahls um eine Längserstreckungsachse des Koaxialkabels zu drehen. Beispielsweise kann eine Drehung um 360° vollzogen werden.

Alternativ oder zusätzlich kann die Vorrichtung eine Bewegungseinrichtung umfassen zum Bewegen eines Laseraustrittspunkts, aus dem der Laserstrahl austritt, um eine Längserstreckungsachse des Koaxialkabels während des Durchtrennens der Abschirmung im freiliegenden Teil der Abschirmung mittels eines Laserstrahls. Die Bewegungseinrichtung kann dafür eingerichtet sein, eine Bewegung um 360° vorzunehmen. Darüber hinaus können ein oder mehrere Spiegel zum Reflektieren des Laserstrahls auf die Abschirmung vorgesehen sein.

In einer bevorzugten Ausführungsform umfasst die Vorrichtung eine Greifeinrichtung zum Entfernen eines mittels des Laserstrahls abgetrennten Teils der Abschirmung.

Darüber hinaus kann die erfindungsgemäße Vorrichtung eine Steuereinrichtung zum Steuern zumindest der Hülseneinführeinrichtung und der Lasereinrichtung umfassen. Mit Hilfe einer solchen Steuereinrichtung können weitere Elemente der Vorrichtung gesteuert werden, wie z.B. die Aufweiteinrichtung, die Halteeinrichtung, die Bewegungseinrichtung, die Spiegel und die Greifeinrichtung.

### Kurze Figurenbeschreibung

Weitere Details von Ausführungsformen der vorliegenden Erfindung sowie dazugehörige Vorteile werden im Folgenden mit Bezug auf die Figuren erläutert. Dabei zeigen:
- Figur 1: eine Ausführungsform eines erfindungsgemäßen Verfahrens;
- Figur 2: ein Koaxialkabel, wie es mit Hilfe des erfindungsgemäßen Verfahrens bearbeitet werden kann;
- Figur 3: ein Beispiel, wie das Aufweiten des freiliegenden Teils der Abschirmung erfolgen kann;
- Figur 4: ein Koaxialkabel mit einer teilweise aufgeweiteten Abschirmung sowie eine Hülse;
- Figur 5: einen Schnitt durch die Hülse aus Figur 4;
- Figur 6: eine Hülse, die zwischen den freiliegenden Teil der Abschirmung und die Innenleiterisolierung geschoben wird;
- Figur 7: ein Koaxialkabel mit einer zwischen den freiliegenden Teil der Abschirmung und die Innenleiterisolierung geschobenen Hülse sowie eine Lasereinrichtung und
- Figur 8: eine Ausführungsform einer erfindungsgemäßen Vorrichtung.

Im Folgenden werden gleiche und gleich wirkende Elemente, sofern nichts anderes angegeben ist, mit denselben Bezugszeichen benannt.

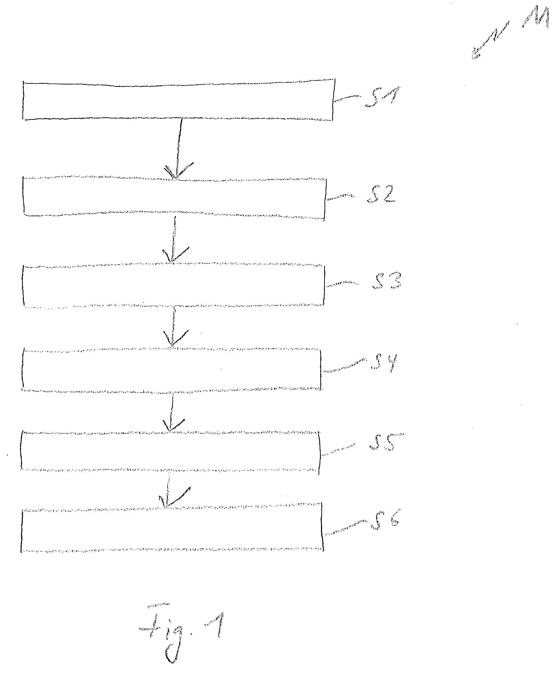

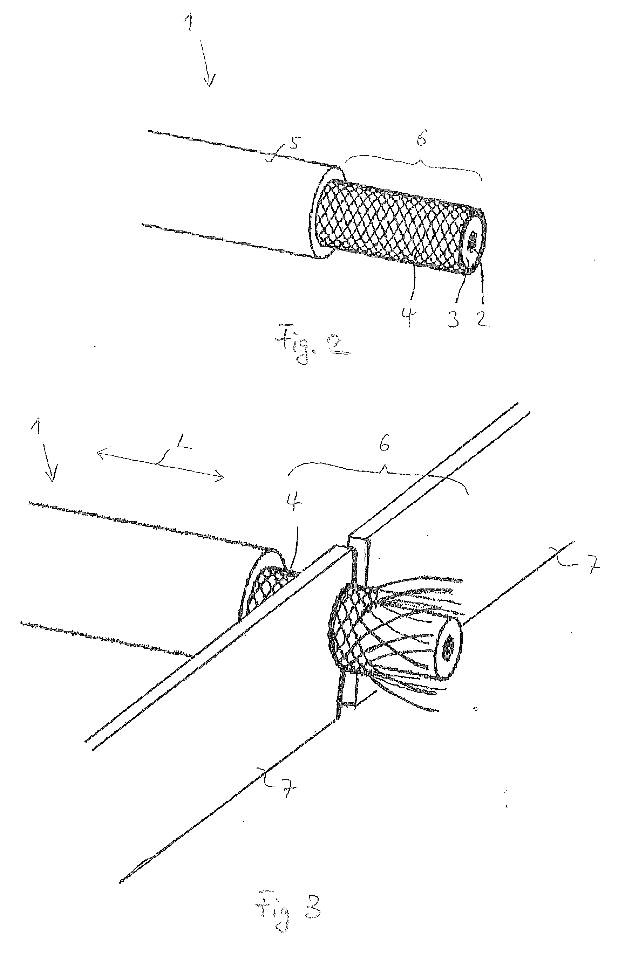

Figur 1 zeigt eine Ausführungsform eines erfindungsgemäßen Verfahrens, das im Folgenden mit Bezug auf die Figuren 2-7 erläutert werden soll. Das in Figur 1 gezeigte Verfahren M weist sechs Schritte S1-S6 auf. In Schritt S1 wird zunächst ein Koaxialkabel bereitgestellt, bei dem an einem Ende die Außenisolierung entfernt ist, so dass ein Teil der Abschirmung freiliegt. Ein Beispiel für ein solches Koaxialkabel ist in Figur 2 gezeigt. Das Koaxialkabel 1 weist einen Innenleiter 2, eine den Innenleiter umgebende Innenleiterisolierung 3, die die Innenleiterisolierung umgebende Abschirmung 4 und eine die Abschirmung umgebende Außenisolierung 5 auf. Da an einem Ende des Koaxialkabels die Außenisolierung 5 entfernt ist, liegt ein Teil 6 der Abschirmung 4 frei.

In Schritt S2 des in Figur 1 gezeigten Verfahrens M wird der freiliegende Teil 6 der Abschirmung 4 mit Hilfe einer in Figur 3 gezeigten Aufweiteinrichtung 7 aufgeweitet. Die Aufweiteinrichtung 7 übt dabei in einer senkrecht zu einer Längserstreckungsachse L des Koaxialkabels 1 verlaufenden Richtung einen Druck von außen auf den freiliegenden Teil 6 der Abschirmung 4 aus.

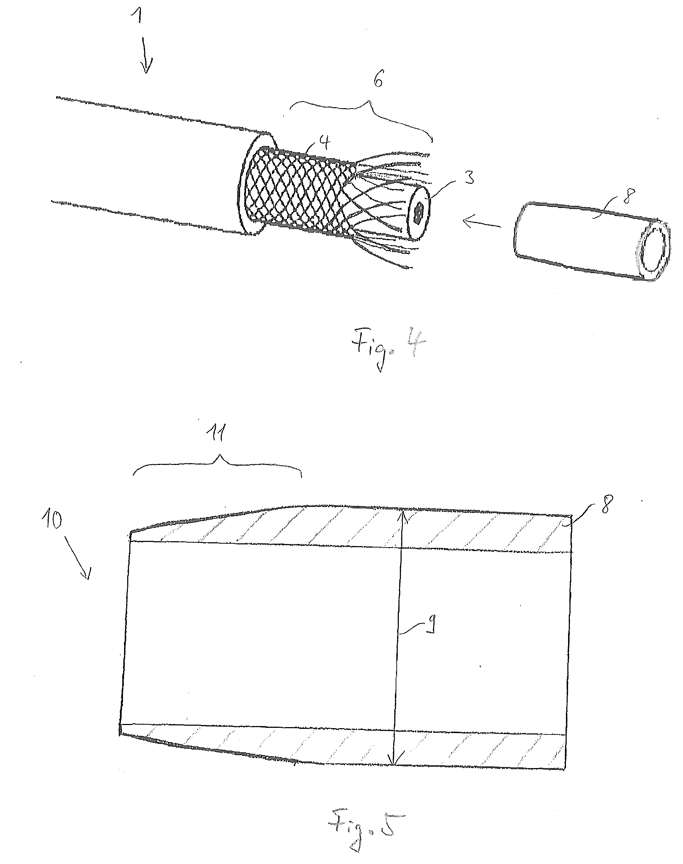

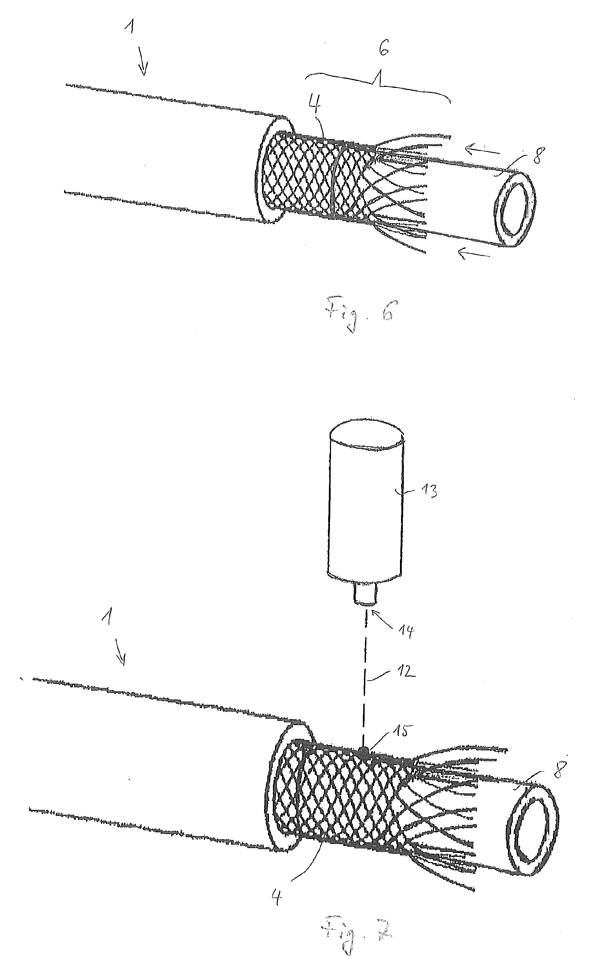

Die in Figur 4 dargestellte wärmebeständige Hülse 8 wird in Schritt S3 des Verfahrens M zwischen den freiliegenden Teil 6 der Abschirmung 4 und die Innenleiterisolierung 3 eingebracht. In Figur 5 ist die Hülse 8 in einer Schnittdarstellung entlang ihrer Längserstreckungsrichtung gezeigt. Dort ist zu sehen, dass sich ein Außendurchmesser 9 der Hülse 8, und damit ein Außenumfang der Hülse, zu einem Ende 10 der Hülse 8 hin reduziert. Dadurch weist die Außenfläche der Hülse 8 in einem Teilbereich 11 eine Kegelstumpfmantelform auf. Dadurch kann die Hülse 8 besonders leicht unter den freiliegenden Teil 6 der Abschirmung 4 geschoben werden. In Figur 6 ist die Hülse 8 noch einmal während des Einbringens der Hülse zwischen den freiliegenden Teil 6 der Abschirmung 4 und die Innenleiterisolierung 3 zu sehen.

In Schritt S4 des Verfahrens M wird die Abschirmung 4 im freiliegenden Teil 6 der Abschirmung 4 mittels eines Laserstrahls 12, wie er in Figur 7 gezeigt ist, durchtrennt. Dabei wird der Laserstrahl 12 von einer Neodym-dotierten Yttrium-Aluminium-Granat-Lasereinrichtung 13 erzeugt. Der Laserstrahl 12 verlässt die genannte Lasereinrichtung an einem Laseraustrittspunkt 14 und durchtrennt die Abschirmung 4 an einem Auftreffpunkt 15. Dieser liegt auf der Hülse 8, so dass die Innenleiterisolierung 3 vor dem Laserstrahl 12 geschützt wird.

Eine Drehung des Koaxialkabels um 360° um die Längserstreckungsachse L des Koaxialkabels 1 erfolgt in Schritt S5 des Verfahrens M während des Durchtrennens der Abschirmung 4 im freiliegenden Teil 6 der Abschirmung 4 mittels eines Laserstrahls 12, so dass die Abschirmung 4 entlang eines Außenumfangs der Hülse 8 durchtrennt wird. In Schritt S6 des Verfahrens M wird dann der mittels des Laserstrahls 12 abgetrennte Teil der Abschirmung 4 entfernt.

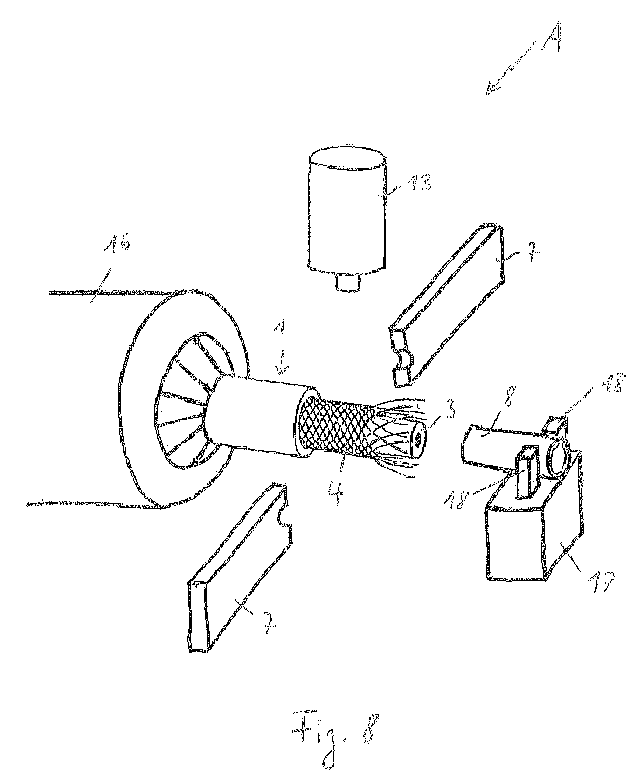

In der Figur 8 ist eine Ausführungsform einer erfindungsgemäßen Vorrichtung zum Durchtrennen einer Abschirmung eines Koaxialkabels dargestellt. Die Vorrichtung A umfasst eine Halteeinrichtung 16 zum Halten des Koaxialkabels 1, bei dem an einem Ende die Außenisolierung entfernt ist, so dass ein Teil der Abschirmung freiliegt. Die Halteeinrichtung 16 ist fähig, das Koaxialkabel 1 um eine Längserstreckungsachse L des Koaxialkabels 1 um 360° zu drehen.

Neben der Halteeinrichtung 16 umfasst die Vorrichtung A eine Hülseneinführeinrichtung 17 zum Einbringen einer wärmebeständigen Hülse 8 zwischen den freiliegenden Teil 6 der Abschirmung 4 und die Innenleiterisolierung 3. Die Hülseneinführeinrichtung 17 hält die Hülse 8 mit den Greifbacken 18 fest und fährt zum Einbringen der Hülse 8 auf das Koaxialkabel 1 zu, bis die Hülse 8 ordnungsgemäß auf dem Koaxialkabel 1 platziert ist. Nach dem vollständigen Durchtrennen der Abschirmung 4 mittels des Laserstrahls greift eine nicht gezeigte Greifeinrichtung den abgetrennten Teil der Abschirmung 4 und entfernt ihn vom Koaxialkabel 1.

Zusätzlich umfasst die Vorrichtung A eine nicht gezeigte Steuereinrichtung, die die Halteeinrichtung 16, die Hülseneinführeinrichtung 17, die Lasereinrichtung 13, die Aufweiteinrichtung 7 sowie die Greifeinrichtung steuert.

Die mit Bezug auf die Figuren gemachten Erläuterungen sind rein illustrativ und nicht beschränkend zu verstehen. An den gezeigten Ausführungsformen können viele Änderungen vorgenommen werden, ohne den Schutzbereich der Erfindung, wie er in den beigefügten Ansprüchen festgelegt ist, zu verlassen.

### BEZUGSZEICHENLISTE

- 1: Koaxialkabel
- 2: Innenleiter
- 3: Innenleiterisolierung
- 4: Abschirmung
- 5: Außenisolierung
- 6: freiliegender Teil der Abschirmung
- 7: Aufweiteinrichtung
- 8: Hülse
- 9: Außendurchmesser der Hülse
- 10: Ende der Hülse
- 11: kegelstumpfmantelförmiger Teilbereich der Außenfläche der Hülse
- 12: Laserstrahl
- 13: Neodym-dotierte Yttrium-Aluminium-Granat-Lasereinrichtung
- 14: Laseraustrittspunkt
- 15: Auftreffpunkt
- 16: Halteeinrichtung
- 17: Hülseneinführeinrichtung
- 18: Greifbacken
- A: Ausführungsform einer erfindungsgemäßen Vorrichtung
- L: Längserstreckungsachse des Koaxialkabels M Ausführungsform eines erfindungsgemäßen Verfahrens
- S1: Bereitstellen eines Koaxialkabels
- S2: Aufweiten des freiliegenden Teils der Abschirmung
- S3: Einbringen einer wärmebeständigen Hülse zwischen den freiliegendem Teil der Abschirmung und die Innenleiterisolierung
- S4: Durchtrennen der Abschirmung im freiliegenden Teil der Abschirmung mittels eines Laserstrahls
- S5: Drehen des Koaxialkabels um eine Längserstreckungsachse des Koaxialkabels
- S6: Entfernen eines mittels des Laserstrahls abgetrennten Teils der Abschirmung

## Patentansprüche

1. Verfahren (M) zum Durchtrennen einer Abschirmung (4) eines Koaxialkabels (1), wobei das Koaxialkabel (1) einen Innenleiter (2), eine den Innenleiter umgebende Innenleiterisolierung (3), die die Innenleiterisolierung umgebende Abschirmung (4) und eine die Abschirmung umgebende Außenisolierung (5) umfasst, wobei ein Koaxialkabel bereitgestellt wird (1) , bei dem an einem Ende die Außenisolierung (5) entfernt ist, so dass ein Teil der Abschirmung (4) freiliegt, **gekennzeichnet durch**
- Einbringen (S3) einer wärmebeständigen Hülse (8) zwischen den freiliegenden Teil (6) der Abschirmung (4) und die Innenleiterisolierung (3) und
- Durchtrennen (S4) der Abschirmung (4) im freiliegenden Teil (6) der Abschirmung (4) mittels eines Laserstrahls (12).

2. Verfahren (M) nach dem vorhergehenden Anspruch, mit dem Schritt Aufweiten (S2) des freiliegenden Teils (6) der Abschirmung (4).

3. Verfahren (M) nach dem vorhergehenden Anspruch, wobei das Aufweiten durch Ausüben eines Drucks von außen auf den freiliegenden Teil (6) er Abschirmung (4) erfolgt, wobei der Druck in einer im Wesentlichen senkrecht zu einer Längserstreckungsachse (L) des Koaxialkabels (1) verlaufenden Richtung ausgeübt wird.

4. Verfahren (M) nach einem der vorhergehenden Ansprüche, wobei die Hülse (8) aus einem Keramikwerkstoff besteht.

5. Verfahren (M) nach einem der vorhergehenden Ansprüche, wobei sich ein Außenumfang der Hülse (8) zu einem Ende (10) der Hülse hin reduziert.

6. Verfahren (M) nach einem der vorhergehenden Ansprüche, wobei der Schritt des Durchtrennens (S4) der Abschirmung den Schritt umfasst Erzeugen des Laserstrahls (12) mittels einer Neodym-dotierten Yttrium-Aluminium-Granat-Lasereinrichtung (13).

7. Verfahren (M) nach einem der vorhergehenden Ansprüche, mit dem Schritt Drehen (S5) des Koaxialkabels (1), insbesondere um 360 Grad, um eine Längserstreckungsachse (L) des Koaxialkabels (1) während des Durchtrennens (S4) der Abschirmung im freiliegenden Teil (6) der Abschirmung (4) mittels eines Laserstrahls (12).

8. Verfahren nach einem der vorhergehenden Ansprüche, mit dem Schritt Bewegen eines Laseraustrittspunkts (14), aus dem der Laserstrahl (12) austritt, insbesondere um 360 Grad, um eine Längserstreckungsachse (L) des Koaxialkabels (1) während des Durchtrennens (S4) der Abschirmung im freiliegenden Teil (6) der Abschirmung (4) mittels eines Laserstrahls (12).

9. Verfahren nach einem der vorhergehenden Ansprüche, mit dem Schritt Reflektieren des Laserstrahls (12) auf die Abschirmung (4) mittels mindestens eines Spiegels.

10. Verfahren (M) nach einem der vorhergehenden Ansprüche, mit dem Schritt Entfernen (S6) eines mittels des Laserstrahls (12) abgetrennten Teils der Abschirmung (4).

11. Vorrichtung (A) zum Durchtrennen einer Abschirmung (4) eines Koaxialkabels (1), wobei das Koaxialkabel (1) einen Innenleiter (2), eine den Innenleiter umgebende Innenleiterisolierung (3), die die Innenleiterisolierung umgebende Abschirmung (4) und eine die Abschirmung umgebende Außenisolierung (5) umfasst, wobei die Vorrichtung aufweist
- eine Halteeinrichtung (16) zum Halten eines Koaxialkabels (1), bei dem an einem Ende die Außenisolierung (5) entfernt ist, so dass ein Teil der Abschirmung (4) freiliegt,
**dadurch gekennzeichnet, dass** die Vorrichtung
- eine Hülseneinführeinrichtung (17) zum Einbringen einer wärmebeständigen Hülse (8) zwischen den freiliegenden Teil (6) der Abschirmung (4) und die Innenleiterisolierung (3) und
- eine Lasereinrichtung (13) zum Durchtrennen der Abschirmung (4) im freiliegenden Teil (6) der Abschirmung (4) mittels eines Laserstrahls (12) aufweist.

12. Vorrichtung (A) nach dem vorhergehenden Anspruch, mit einer Steuereinrichtung zum Steuern zumindest der Hülseneinführeinrichtung (17) und der Lasereinrichtung (13).

## Claims

1. Method (M) for cutting through a shielding (4) of a coaxial cable (1), wherein the coaxial cable (1) comprises an inner conductor (2), an inner conductor insulation (3) which surrounds the inner conductor, the shielding (4) which surrounds the inner conductor insulation, and an outer insulation (5) which surrounds the shielding, wherein a coaxial cable (1) is provided, the outer insulation (5) being removed from one end of the said coaxial cable so that a portion of the shielding (4) is exposed, **characterized by**
- inserting (S3) a heat-resistant sleeve (8) between the exposed portion (6) of the shielding (4) and the inner conductor insulation (3), and
- cutting through (S4) the shielding (4) in the exposed portion (6) of the shielding (4) by means of a laser beam (12).

2. Method (M) according to the preceding claim, comprising the step of widening (S2) the exposed portion (6) of the shielding (4).

3. Method (M) according to the preceding claim, wherein the widening operation is performed by exerting a pressure onto the exposed portion (6) of the shielding (4) from the outside, wherein the pressure is exerted in a direction which runs substantially perpendicular to an axis (L) of longitudinal extent of the coaxial cable (1).

4. Method (M) according to one of the preceding claims, wherein the sleeve (8) is composed of a ceramic material.

5. Method (M) according to one of the preceding claims, wherein an outer circumference of the sleeve (8) decreases in the direction of one end (10) of the sleeve.

6. Method (M) according to one of the preceding claims, wherein the step of cutting through (S4) the shielding comprises the step of generating the laser beam (12) by a neodymium-doped yttrium aluminium garnet laser device (13).

7. Method (M) according to one of the preceding claims, comprising the step of rotating (S5) the coaxial cable (1), in particular through 360 degrees, about an axis (L) of longitudinal extent of the coaxial cable (1) while cutting through (S4) the shielding in the exposed portion (6) of the shielding (4) by means of a laser beam (12).

8. Method according to one of the preceding claims, comprising the step of moving a laser exit point (14) from which the laser beam (12) exits, in particular through 360 degrees, about an axis (L) of longitudinal extent of the coaxial cable (1) while cutting through (S4) the shielding in the exposed portion (6) of the shielding (4) by means of a laser beam (12).

9. Method according to one of the preceding claims, comprising the step of reflecting the laser beam (12) onto the shielding (4) by means of at least one mirror.

10. Method (M) according to one of the preceding claims, comprising the step of removing (S6) a portion of the shielding (4) which is cut off by means of the laser beam (12).

11. Apparatus (A) for cutting through a shielding (4) of a coaxial cable (1), wherein the coaxial cable (1) comprises an inner conductor (2), an inner conductor insulation (3) which surrounds the inner conductor, the shielding (4) which surrounds the inner conductor insulation, and an outer insulation (5) which surrounds the shielding, wherein the apparatus has
- a holding device (16) for holding a coaxial cable (1), the outer insulation (5) being removed from one end of the said coaxial cable so that a portion of the shielding (4) is exposed, **characterized in that** the apparatus has
- a sleeve insertion device (17) for inserting a heat-resistant sleeve (8) between the exposed portion (6) of the shielding (4) and the inner conductor insulation (3), and
- a laser device (13) for cutting through the shielding (4) in the exposed portion (6) of the shielding (4) by means of a laser beam (12).

12. Apparatus (A) according to the preceding claim, comprising a control device for controlling at least the sleeve insertion device (17) and the laser device (13).

## Revendications

1. Procédé (M) de sectionnement d'un blindage (4) d'un câble coaxial (1), dans lequel le câble coaxial (1) comprend un conducteur interne (2), une isolation de conducteur interne (3) entourant le conducteur interne, qui comprend le blindage (4) entourant l'isolation de conducteur interne et une isolation externe (5) entourant le blindage, dans lequel il est fourni un câble coaxial (1) dont l'isolation externe (5) est sectionnée à une extrémité de manière à ce qu'une partie du blindage (4) soit détachée, **caractérisé par**
- la mise en place (S3) d'un gaine thermiquement résistante (8) entre la partie détachée (6) du blindage (4) et l'isolation de conducteur interne (3) et
- le sectionnement (S4) du blindage (4) dans la partie détachée (6) du blindage (4) au moyen d'un faisceau laser (12).

2. Procédé (M) selon la revendication précédente, comprenant l'étape consistant à évaser (S2) la partie détachée (6) du blindage (4).

3. Procédé (M) selon la revendication précédente, dans lequel l'évasement est effectué en exerçant une pression de l'extérieur sur la partie détachée (6) du blindage (4), dans lequel la pression est exercée dans une direction sensiblement perpendiculaire à un axe d'extension longitudinal (L) du câble coaxial (1).

4. Procédé (M) selon l'une quelconque des revendications précédentes, dans lequel la gaine (8) est constituée d'un matériau céramique.

5. Procédé (M) selon l'une quelconque des revendications précédentes, dans lequel une circonférence externe de la gaine (8) se réduit vers une extrémité (10) de la gaine.

6. Procédé (M) selon l'une quelconque des revendications précédentes, dans lequel l'étape de sectionnement (S4) du blindage comprend l'étape consistant à générer le faisceau laser (12) au moyen d'un dispositif à laser (13) à grenat d'yttrium-aluminium dopé au néodyme.

7. Procédé (M) selon l'une quelconque des revendications précédentes, comprenant l'étape consistant à mettre en rotation (S5) le câble coaxial (1), notamment de 360°, autour d'un axe d'extension longitudinal (L) du câble coaxial (1) pendant le sectionnement (S4) du blindage dans la partie détachée (6) du blindage (4) au moyen d'un faisceau laser (12).

8. Procédé selon l'une quelconque des revendications précédentes, comprenant l'étape consistant à déplacer le point de sortie du laser (14) d'où provient le faisceau laser (12), notamment de 360°, autour d'un axe d'extension longitudinal (L) du câble coaxial (1) pendant le sectionnement (S4) du blindage dans la partie détachée (6) du blindage (4) au moyen d'un faisceau laser (12).

9. Procédé selon l'une quelconque des revendications précédentes, comprenant l'étape consistant à réfléchir le faisceau laser (12) sur le blindage (4) au moyen d'au moins un miroir.

10. Procédé (M) selon l'une quelconque des revendications précédentes, comprenant l'étape consistant à retirer (S6) une partie du blindage (4) sectionnée au moyen du faisceau laser (12).

11. Dispositif (A) destiné à sectionner un blindage (4) d'un câble coaxial (1), dans lequel le câble coaxial (1) comprend un conducteur interne (2), une isolation de conducteur interne (3) entourant le conducteur interne, qui comprend le blindage (4) entourant l'isolation de conducteur interne et une isolation externe (5) entourant le blindage, dans lequel le dispositif comporte
- un dispositif de maintien (16) destiné à maintenir un câble coaxial (1), dans lequel l'isolation externe (5) est retirée à une extrémité de manière à ce qu'une partie du blindage (4) soit détachée,
**caractérisé en ce que** le dispositif comporte
- un dispositif d'insertion de gaine (17) destiné à mettre en place une gaine thermiquement résistante (8) entre la partie détachée (6) du blindage (4) et l'isolation de conducteur interne (3), et
- un dispositif à laser (13) destiné à sectionner le blindage (4) dans la partie détachée (6) du blindage (4) au moyen d'un faisceau laser (12).

12. Dispositif (A) selon la revendication précédente, comportant un dispositif de commande destiné à commander au moins le dispositif d'insertion de gaine (17) et le dispositif à laser (13).
